# EUROPÄISCHE PATENTANMELDUNG

(11) **EP 0 777 991 A1**
(43) Veröffentlichungstag der Anmeldung: **11.06.1997**
(21) Anmeldenummer: 96117066.9
(22) Anmeldetag: 24.10.1996
(51) Int. Cl.: A47J 31/46, A47J 31/54

(54) **Espressomaschine**

(30) Priorität: 04.12.1995 DE 19545112
(71) Anmelder: Braun Aktiengesellschaft, Frankfurt am Main (DE)
(72) Erfinder: Trebitz, Bernd, Dr., 61350 Bad Homburg (DE); Lietz, Manfred, 61137 Schöneck (DE); Schotte, Dietwald, 65760 Eschborn (DE); Herz, Volker, 55422 Bacharach (DE)

(57) **Zusammenfassung**

Die Espressomaschine besteht aus einer einen elektrisch beheizten Wassererhitzer (8) aufweisenden Heizeinrichtung (10), mit der Wasser erhitzt werden kann, das einer elektrisch angetriebenen Druckpumpe (49) zugeführt, dort unter Druck gesetzt und anschließend einer mit Espressomehl befüllbaren und verschließbaren Druckkammer (53) zugeführt wird, von wo das so extrahierte Espressogetränk über einen Auslaß (68) in einen Behälter (57) abfließt. Nach der Erfindung wird in dem Wassererhitzer (8) ein Dampf-Wasser-Gemisch erzeugt und gleichzeitig ist in der Leitung (14, 45, 48) zwischen dem Wassererhitzer (8) und der Druckpumpe (49) ein Heißwasserspeicher (46) ausgebildet, aus dem das heiße Wasser zur Druckpumpe (49) hin abfließen kann. Durch den erfindungsgemäßen Heißwasserspeicher (46) ist es möglich, auch in einer Espressomaschine einen einfachen Durchlauferhitzer (8) einzusetzen, so daß nunmehr ebenso zügig heißes Wasser für die Herstellung eines Espressos der Druckkammer (53) geliefert werden kann.

## Beschreibung

Die Erfindung betrifft eine Espressomaschine, die aus einer einen elektrisch beheizten Wassererhitzer aufweisenden Heizeinrichtung besteht, mit der Wasser erhitzt werden kann, das einer elektrisch angetriebenen Druckpumpe zugeführt, dort unter Druck gesetzt und anschließend einer mit Espressomehl befüllbaren und verschließbaren Druckkammer zugeführt wird, von wo das so extrahierte Espressogetränk über einen Auslaß in einen Behälter abfließt.

Ein derartiger Wassererhitzer für eine Espressomaschine ist beispielsweise aus der EP-0 342 516 A1 bekannt. Der Wassererhitzer besteht aus einem Thermoblock, in dem wasserführende Kanäle ausgebildet sind, die von einer Heizeinrichtung beheizt werden. Derartige Thermoblöcke sind bezüglich ihrer Temperaturregelung verhältnismäßig träge, da es immer eine gewisse Zeit in Anspruch nimmt, bis der vorzugsweise aus Aluminium bestehende Gußblock auf seine richtige Temperatur aufgeheizt ist, bzw. nach Abgabe seiner Wärme an das Wasser sich wieder abgekühlt hat. Dies kann sich auch auf die Wassertemperatur nachteilig auswirken, da diese aufgrund der Trägheit der Temperaturregelung des Thermoblocks immer im Bereich von einigen Grad Celsius schwankt. Diese Thermoblöcke sind auch in ihrer Herstellung aufwendig und benötigen zum Speichern von Wärme eine ziemlich große Gußmasse.

Bei diesem Thermoblock ist neben dem Wasserkanal zusätzlich ein Dampfkanal ausgebildet, in den zum Erzeugen von Dampf, der beispielsweise zum Erhitzen von Getränken oder zum Aufschäumen von Milch dient, nur eine geringe Menge an Wasser pro Zeiteinheit eingeleitet wird. Dabei wird ein Ventil betätigt, das einerseits die Wasserzufuhr zu der für die Herstellung eines Espressos zuständigen Kanaleinrichtung sperrt und gleichzeitig eine gedrosselte Wasserzufuhr zu dem Dampfkanal freigibt und durch das andererseits eine zweite Heizeinrichtung zugeschaltet wird, damit die Temperatur des Thermoblocks steigt und so überhaupt Dampf in ausreichender Menge im Dampfkanal erzeugt werden kann.

Aus der DE-41 30 447 A1 ist weiterhin ein Wassererhitzer für eine Espressomaschine bekannt, der aus einem mit Wasser befüllbaren Behälter und einer am Boden des Behälters ausgebildeten Heizeinrichtung besteht. Zwischen der Heizeinrichtung und dem Boden des Behälters ist noch ein Dampfrohr ausgebildet, in dem - neben heißem Wasser- zusätzlich noch Dampf erzeugt werden kann. Die Heizeinrichtung und das Dampfrohr sind übereinander angeordnet und gut wärmeleitend sowohl untereinander wie mit dem Boden des Behälters verbunden.

Bei diesem Wassererhitzer muß erst das ganze im Behälter befindliche Wasser erhitzt werden, bis anschließend über eine Entnahmestelle heißes Wasser zum Aufbrühen eines Tees, eines Kaffees oder eines Espressos entnommen werden kann. Allerdings kann dann so viel heißes Wasser in kürzester Zeit entnommen werden, bis der Behälter leer ist. Dabei wird das heiße Wasser von einer elektrisch betriebenen Druckpumpe angesaugt und einer mit Kaffee- oder Espressomehl füllbaren Brühkammer unter Druck zugeführt.

Aufgabe der Erfindung ist es nunmehr, eine Espressomaschine zu schaffen, die mit geringem materiellen Aufwand äußerst einfach ausgeführt und kostengünstig ist.

Diese Aufgabe wird durch die kennzeichnenden Merkmale des Patentanspruchs 1 gelöst. Durch den erfindungsgemäßen Heißwasserspeicher ist es möglich, auch in einer Espressomaschine einen einfachen Durchlauferhitzer einzusetzen, so daß nunmehr ebenso zügig heißes Wasser für die Herstellung eines Espressos geliefert werden kann. Bei diesem einfachen Durchlauferhitzer wird nämlich während der Wassererhitzung ein Dampf-Wasser- Gemisch erzeugt, das nach der Erfindung vor dem eigentlichen Brühvorgang in der Brühkammer einem Heißwasserspeicher zugeführt wird, wo dann das heiße Wasser gespeichert wird. Der Dampf strömt dabei in die Atmosphäre ab oder er kann in das gespeicherte Heißwasser eingeleitet werden, um dem Heißwasser noch Wärmeenergie zuzuführen. Der Durchlauferhitzer fördert also heißes Wasser in den Heißwasserspeicher, sobald die Heizeinrichtung eingeschaltet ist. Bereits nach kurzer Zeit (weniger als zwei Minuten) kann dann die Pumpe eingeschaltet werden, da sich in dieser Zeit bereits ausreichend heißes Wasser im Heißwasserspeicher angesammelt hat.

Nach den Merkmalen des Patentanspruchs 2 besteht der Wassererhitzer aus einem selbstfördernden Durchlauferhitzer, der aufgrund seiner einfachen Ausgestaltung, die nämlich lediglich aus einem an einem vorzugsweise u-förmig verlaufenden Wasserrohr angelöteten, der Kontur des Wasserrohres angepaßten Heizstab besteht, besonders preiswert ist. Um eine ausreichende Heißwasserförderung zu erreichen, ist es erforderlich, daß der Durchlauferhitzer unterhalb des Wasserspiegels des Wasservorratsbehälters angeordnet ist und daß in der Auslaßleitung des Wasservorratsbehälters ein in Richtung des Wasservorratsbehälters bei Druckerhöhung in der Auslaßleitung schließendes Absperrventil ausgebildet ist.

Durch die Merkmale des Patentanspruchs 3 wird erreicht, daß die Espressomaschine nicht allzu groß baut. Ein Fassungsvermögen von etwa ein bis zwei Espressotassen reicht aus, um beim Zubereiten von Espresso ohne Unterbrechung mindestens vier oder mehr Tassen herzustellen.

Durch die Merkmale des Patentanspruchs 4 wird verhindert, daß der Heißwasserspeicher aufgrund der kommunizierenden Leitungen nach einem vollständigen Füllvorgang des Wasservorratsbehälters nicht mit Kaltwasser teilweise oder gar ganz gefüllt wird.

Durch die Merkmale des Patentanspruchs 5 können auf der mit Löchern versehenen Abdeckplatte Tassen abgestellt werden, die im Standby-Betrieb oder die während des Betriebes der Espressomaschine aufgewärmt werden.

Nach den Merkmalen des Patentanspruchs 6 wird durch die Ausbildung eines zusätzlichen Dampfabscheiders in der Espressomaschine erreicht, daß auch Dampf mit einem das heiße Wasser selbstfördernden Durchlauferhitzer erzeugt werden kann. Dabei ist der Durchlauferhitzer besonders preiswert und es wird der ohnehin beim Erhitzen des Wassers entstehende Dampf nunmehr auch noch zum Erhitzen von Getränken oder zum Aufschäumen von Milch genutzt.

Ein derartiger Dampfabscheider kann sowohl in einer Espressomaschine oder auch in einer Kaffee- oder Teemaschine eingesetzt werden. Es ist aber auch denkbar, den Dampfabscheider in einer kombinierten Espresso-, Kaffee- oder Teemaschine einzusetzen. Um das über die Abflußleitung aus dem Dampfabscheider abfließende Heißwasser gleich wieder dem Durchlauferhitzer zuführen zu können, ist eine Verengung der Abflußleitung des Dampfabscheiders gegenüber der Ausgangsleitung des Durchlauferhitzers vorgesehen, die eine eindeutige Fließrichtung des Dampf-Wasser-Gemischs durch den Durchlauferhitzer erlaubt, d.h., das Dampf-Wasser-Gemisch fließt immer in Richtung des Heißwasserspeichers oder des Dampfabscheiders aus dem Durchlauferhitzer. Allerdings darf die Abflußleitung in ihrem Querschnitt nicht so klein sein, daß das im Dampfabscheider ansammelnde Heißwasser den Dampfabscheider überflutet.

Bei der Verwendung eines Dampfabscheiders und eines Heißwasserspeichers in einer Espressomaschine muß ein Mehrwegeventil benutzt werden, das im Dampfbetrieb die Leitung zum Heißwasserspeicher sperrt und über eine weitere Ausgangsleitung den Weg zum Dampfabscheider freigibt und das im Espressobetrieb die Leitung zum Heißwasserspeicher freigibt und über die weitere Ausgangsleitung den Weg zum Dampfabscheider sperrt.

Um nach einem Dampfbetrieb der Espressomaschine oder einer kombinierten Espresso-, Kaffee-, oder Teemaschine den Druck in den zum Dampfabscheider führenden Leitungen sowie den Druck im Dampfabscheider selbst abzubauen, sind die Merkmale des Patentanspruchs 7 vorgesehen. Die Expansionsleitung sorgt dafür, daß der Überdruck zum Wasservorratsbehälter, zu einem gesonderten Wassertank oder zu sonst einer geschützten Stelle der Espressomaschine hin abgebaut wird. Dabei muß dann das Mehrwegeventil eine weitere, vierte Stellung aufweisen. Die Expansionsleitung kann aber auch gleichzeitig die Zuleitung zum Heißwasserspeicher sein.

Wird die erfindungsgemäße Espressomaschine ausschließlich als kompakte Brühgetränkezubereitungsmaschine benutzt, die sowohl Espresso und Dampf als auch Kaffee bzw. Tee herstellen kann, so sind die Merkmale des Patentanspruchs 8 vorgesehen. Das Mehrwegeventil muß hierbei auf eine weitere Ventilstellung (zweite Stellung) erweitert werden, in der dann die Leitungen zum Heißwasserspeicher und zum Dampfabscheider gesperrt werden, während die Leitung zu einem Filtergehäuse geöffnet wird. Gleichzeitig ist in die Brühgetränkezubereitungsmaschine eine Pumpe und ein Heißwasserspeicher integriert, der von dem herkömmlichen Durchlauferhitzer stets mit heißem Wasser versogt wird und dieses dann speichert, um so bei Einschaltung der Pumpe sofort heißes Wasser in die Druckkammer fördern zu können. Der Durchlauferhitzer fördert also heißes Wasser in den Heißwasserspeicher, sobald das Mehrwegeventil in die Espressostellung gebracht wird und die Heizeinrichtung eingeschaltet ist. Bereits nach kurzer Zeit kann dann die Pumpe eingeschaltet werden, sobald sich ausreichend heißes Wasser im Heißwasserspeicher befindet.

Durch die Merkmale des Patentanspruchs 9 wird stets gewährleistet, daß beim Wechsel vom Dampfbetrieb in einen Brühbetrieb die Expansionsstellung durchfahren werden muß, um so immer erst den Druck im Dampfabscheider, falls vorhanden, abzubauen. Hierdurch baut sich der heiße Dampfstrahl nicht über den Brühkopf des Filtergehäuses oder über die Druckkammer der Espressoeinrichtung ab, wo dann bei zufälligem Eingreifen der Hand einer Bedienungsperson Handflächen verbrannt werden könnten.

Sollte allerdings die Dampfleitung auch zum Fördern von heißem Wasser dienen, der dann an der Entnahmestelle entnommen werden kann, so müßte nur in der Abflußleitung ein zusätzliches Ventil ausgebildet sein, das bei Heißwasserbetrieb geschlossen wird . Gleichzeitig muß dann das Mehrwegeventil zur Ausgangsleitung hin geöffnet sein.

Ein Ausführungsbeispiel der Erfindung ist in der Zeichnung dargestellt und wird im folgenden näher beschrieben. Es zeigen:
- Fig. 1: einen prinzipiellen schematischen Aufbau einer Heißwasserspeichereinrichtung für eine Espressomaschine oder für ein sonstiges Haushaltsgerät,
- Fig. 2: eine Integration der in Fig. 1 dargestellten Heißwasserspeichereinrichtung in einer Getränkezubereitungsmaschine, die sowohl Kaffee, Tee, Dampf als auch Espresso herstellen kann, in der zusätzlich ein Dampfabscheider integriert ist, wobei hier ein anderer Maßstab gewählt wurde als in Fig. 1.

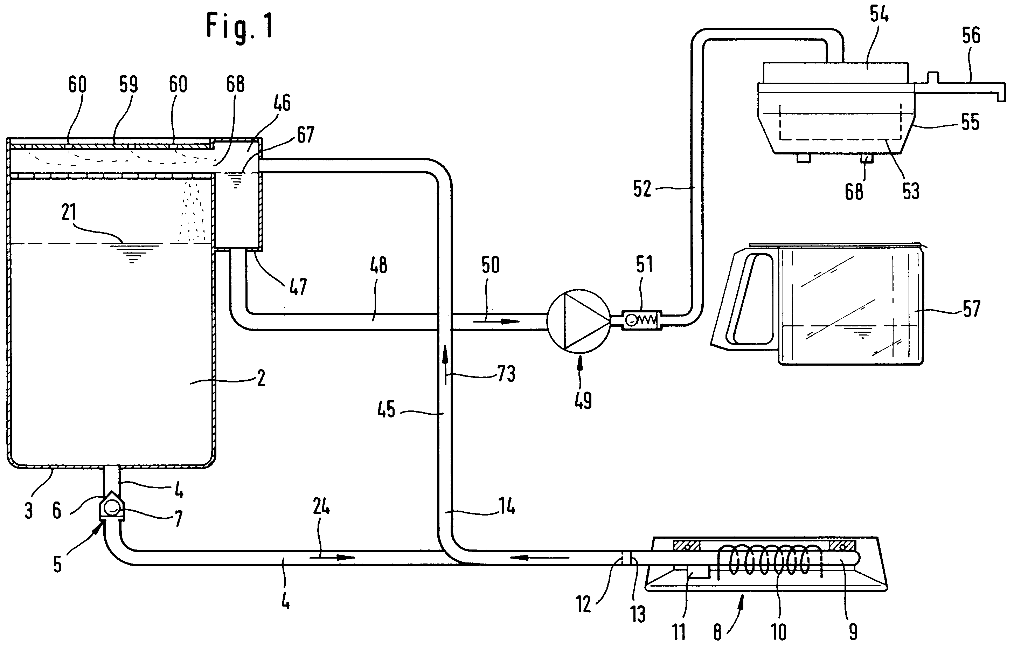

Die in Fig. 1 prinzipiell dargestellte Espressomaschine weist einen Wasservorratsbehälter 2 auf, der an seinem Boden 3 mit einer Auslaßleitung 4 versehen ist. Der Wasservorratsbehälter 2 ist bis zu seiner maximalen Füllmarke 21 mit Trinkwasser füllbar.

In der Auslaßleitung 4 ist ein in Richtung zum Wasservorratsbehälter 2 selbsttätig schließendes Absperrventil 5 ausgebildet, das aus einem Dichtsitz 6 und einer Kugel 7 besteht, die bei gefülltem Wasservorratsbehälter 2 aufgrund ihres Auftriebes aufsteigt und dichtend am Dichtsitz 6 anliegt; dies allerdings nur dann, wenn der Wasserstand in den Leitungen 4, 14, 45 gleich hoch ist, also am Absperrventil 5 keine Srömung in Pfeilrichtung 24 vorhanden ist. Die Kugel 7 hebt vom Dichtsitz 6 ab und öffnet das Absperrventil 5, wenn der Wasserstand in den Leitungen 4, 14, 45 gegenüber dem Wasserstand im Wasservorratsbehälter 2 absinkt und auf diese Weise ein Nachströmen von Wasser über die Auslaßleitung 4 zum Durchlauferhitzer 8 in 24 erfolgt.

Vor dem Absperrventil 5 kann wahlweise ein manuell schaltbares Absperrventil angeordnet sein. Dies hat zur Folge, daß das Wasser aus dem Vorratsbehälter in die vorgewärmte Heizung strömt und damit die Bereitschaftszeit verkürzt. Außerdem entleert sich der Durchlauferhitzer nach Verschließen selbsttätig und kein Restwasser verbleibt im Heizungssystem.

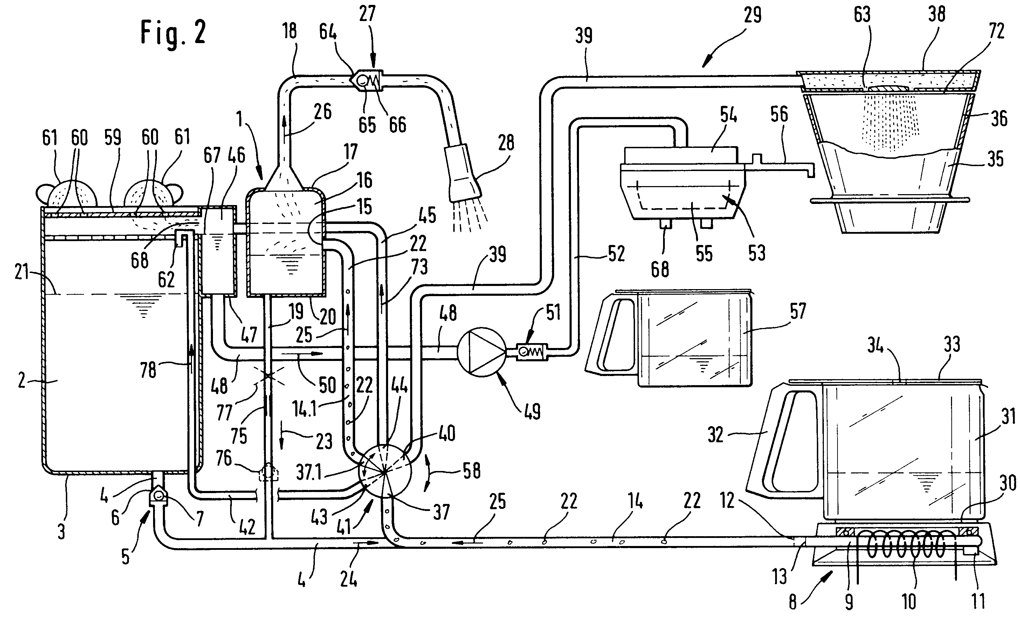

An die Auslaßleitung 4 hinter dem Absperrventil 5 schließt sich der Wassererhitzer 8 an, der aus einem metallischen und gut wärmeleitenden Wasserrohr 9 besteht, an das eine elektrische Heizeinrichtung 10 gut wärmeleitend angebunden ist. Die elektrische Heizeinrichtung 10 besteht vorzugsweise aus einem Heizstab, bei dem der Heizwendel isolierend in ein Metallrohr eingebettet ist. Der Heizstab ist dann an das Wasserrohr 9 angelötet oder anderweitig befestigt und besteht, wie das Wasserrohr 9, aus gut wärmeleitendem Metall, wie Aluminium oder Kupfer. Zur Vereinfachung wurde die elektrische Heizeinrichtung 10 in Fig. 1 und 2 als einfacher Heizwendel skizzenhaft dargestellt, der das Wasserrohr 9 isolierend konzentrisch umgibt. Eine derartige Ausführung ist ebenso denkbar.

Der Durchlauferhitzer 8 ist mit einem Thermostaten 11 versehen, der den Heizstab 10 vor Überhitzungen schützt. Weiterhin können die Stromleitungen des Durchlauferhitzers 8 noch mit einem oder zwei Temperaturschmelzsicherungen versehen sein, die, falls der Thermostat 11 im Betrieb einmal ausfällt, den Strom zum Durchlauferhitzer 8 gänzlich unterbricht und somit ausgetauscht werden muß.

Der Durchlauferhitzer 8 weist einen Einlaß 12 auf, über den das vom Wasservorratsbehälter 2 über die Auslaßleitung 4 kommende Kaltwasser in das Wasserrohr 9 einfließt. Am Ausgang des Wasserrohrs 9 ist der Auslaß 13 ausgebildet, an den sich eine Ausgangsleitung 14 und eine Verbindungsleitung 45 anschließt. Die Verbindungsleitung 45 führt in Pfeilrichtung 73 zu einem Heißwasserspeicher 46, dessen Boden 47 ebenfalls oberhalb der maximalen Füllhöhe 21 des Wasservorratsbehälters 2 angeordnet ist. Der Heißwasserspeicher 46 weist einen Überlauf 68 auf, der oberhalb der maximalen Füllhöhe 67 des Heißwasserspeichers 46 in den Wasservorratsbehälter 2 mündet. Der Boden 47 ist mit einer Espressoleitung 48 verbunden, die zu einer elektrisch betriebenen Druckpumpe 49 führt.

Von der Druckpumpe 49 führt nach Figuren 1 und 2 das unter Druck (etwa 15 bar) gesetzte und beschleunigte Heißwasser zu einem entgegen der Fließrichtung 50 arbeitenden zweiten Rückschlagventil 51, von wo das Heißwasser über eine Druckleitung 52 in eine verschließbare und mit Espressomehl füllbare Druckkammer 53 einfließt. Die Druckkammer 53 wird von der einen Seite von dem Brühkolben 54 und von der anderen Seite von einem das Espressomehl aufnehmenden Siebkorbträger 55 mit Handgriff 56 gebildet, der mit dem Brühkolben 54 dichtend verschließbar ist. Zur Entnahme des Espressomehls nach dem Brühvorgang kann der Siebkorbträger 55 von dem Brühkopf 54 über eine in der Zeichnung nicht dargestellte Schraubverbindung gelöst werden.

Oberhalb des Heißwasserspeichers 46 ist nach Fig. 1 an dessen Rand eine Abstellplatte 59 aufgesetzt, die mit Löchern 60 versehen ist. Aus den Löchern 60 steigt sowohl der Dampf des im Zwischenbehälter 46 befindlichen Heißwassers wie der Dampf aus dem Dampf-Wasser-Gemisch empor, der auf der Abstellplatte 59 abgestellte Trinktassen 61 (Fig. 2) erwärmt.

In Fig. 2 ist der prinzipielle Aufbau einer Getränkezubereitungsmaschine 29 dargestellt, die sowohl als Espresso-, Kaffee- oder Teemaschine benutzt werden kann. Wie aus Fig. 2 zu erkennen ist, ist hier die in Fig. 1 prinzipiell dargestellte Espressomaschine in einer Getränkezubereitungsmaschine 29 eingesetzt, so daß auf Teile, die bereits in Fig. 1 erläutert wurden, in Fig. 2 nicht näher eingegangen wird. Zur Vermeidung von Wiederholungen werden daher für entsprechend gleiche Bauteile gemäß Fig. 1 in Fig. 2 gleiche Bezugszeichen gewählt. Diese Getränkezubereitungsmaschine 29 kann neben der Herstellung eines Espressos zusätzlich noch Dampf zum Aufschämen von Milch oder zum Aufheizen eines Getränks sowie Kaffee oder Tee herstellen.

In Fig. 2 ist daher zwischen der Ausgangsleitung 14 und der Verbindungsleitung 45 ein Mehrwegeventil 41 angeschlossen, das In der Espressostellung 37,44 die Verbindung zur Verbindungsleitung 45 herstellt und das in seiner Dampfstellung 37,37.1 die in Fig. 2 mit einer weiteren Ausgangsleitung 14.1 verbunden ist, deren eines Ende in einen Eingang 15 eines Dampfabscheiders 16 mündet, der aus einem im wesentlichen geschlossenen Behälter 17 besteht und der an seiner Oberseite mit einer Dampfleitung 18 und an seinem Boden 20 mit einer Abflußleitung 19 versehen ist.

An dieser Stelle sei noch erwähnt, daß die einzelnen Stellungen des Mehrwegeventils 41 in Fig. 2 mit Hilfe der im Mehrwegeventil 41 ausgebildeten Kanäle 37, 37.1, 40, 44 und 43 und der Anschlußleitungen 14, 14.1, 39, 45, und 42 angegeben werden, die aber hier nur schematisch dargestellt sind.

Der Boden 20 des Dampfabscheiders 16 ist in Fig. 2 etwa in Höhe der maximalen Füllhöhe 21 des Wasservorratsbehälters 2 ausgebildet, damit beim Befüllen des Wasservorratsbehälters 2 bis zur maximalen Füllmarke nicht auch aufgrund der kommunizierenden Kanäle 4, 14, 14.1, 39, 45, 48, 19, und 42 der Dampfabscheider 16 mit Wasser teilweise oder gar völlig gefüllt wird. Die am Boden 20 des Dampfabscheiders 16 austretende Abflußleitung 19 weist einen geringeren Querschnitt als die Ausgangsleitung 4 auf; dies ist deshalb erforderlich, damit der beim Aufheizen des Wassers im Durchlauferhitzer 8 entstehende geringe Überdruck, der durch die Bildung von Dampfblasen 22 entsteht, nicht dafür sorgt, daß das erhitzte Wasser über die Abflußleitung 19 in den Dampfabscheider 16 gefördert wird.

Die gleiche Aufgabe hat das Absperrventil 5 in der Auslaßleitung 4 des Wasservorratsbehälters 2. Es soll nämlich im Betrieb des Durchlauferhitzers 8 das im Wasserrohr 9 erhitzte und mit Dampfblasen 22 vermischte Wasser ausschließlich über den Auslaß 13 und die Leitung 14 zum Eingang 15 und von dort in den Dampfabscheider 16 und nicht zurück zum Wasservorratsbehälter 2 gefördert werden. Ohne diese Sperreinrichtungen könnte also eine eindeutige Fließrichtung des heißen Wassers durch den Durchlauferhitzer 8 nicht festgelegt werden.

Anstelle einer im Querschnitt kleineren Abflußleitung 19 nach Fig. 2 kann diese auch den gleichen Querschnitt wie die Leitung 14 aufweisen, allerdings muß dann in der Abflußleitung 19 ein zum Dampfabscheider 16 hin schließendes Rückschlagventil 76 ausgebildet sein, damit das erhitzte Dampf-Wasser-Gemisch ausschließlich nur über die Leitung 14 in den Dampfabscheider 16 fließt. Dieses Rückschlagventil 76 kann dann genauso ausgebildet sein wie das Absperrventil 5, d.h., es öffnet, wenn nach einem Schub von heißem Wasser aus dem Durchlauferhitzer 8 dieser neues Wasser nachsaugt, das dann teilweise aus der Abflußleitung 19 des Dampfabscheiders 19 und aus der Auslaßleitung 4 vom Wasservorratsbehälter 2 nachfließt. Das Rückschlagventil 76 ist nur gestrichelt angedeutet, da es hier nicht benötigt wird, weil die Abflußleitung im Querschnitt bereits dünner ausgebildet ist als der Querschnitt der Leitungen 14, 14.1. Gleiche Funktion würde die Drossel 75 erfüllen.

Die Fließrichtung in der Abflußleitung 19 wird in Fig. 2 durch den Pfeil 23 dargestellt. Der Pfeil 24 zeigt die Fließrichtung in der Auslaßleitung 4 an, während der Pfeil 25 die Strömungsrichtung in der Leitung 14 und der Pfeil 26 die Strömungsrichtung in der Dampfleitung 18 anzeigen.

In der Dampfleitung 18 ist in Fig. 2 ein zum Dampfabscheider 16 hin schließendes erstes Rückschlagventil 27 ausgebildet, das erst dann öffnet, wenn der vom Dampfabscheider kommende Dampf einen geringen Überdruck erreicht. Hierdurch erfährt der am freien Ende der Dampfleitung 18 austretende Dampf eine höhere Dampfgeschwindigkeit. Die Dampfgeschwindigkeit kann durch Anbringung einer bei Espressomaschinen allgemein bekannten Aufschäumdüse 28 noch verstärkt werden, so daß Milch zur Herstellung eines Cappuccinos in besonders kurzer Zeit aufgeschäumt und erwärmt werden kann. Ebenso können an der Aufschäumdüse 28 Getränke in kurzer Zeit erwärmt werden.

In Fig. 2 weist die Brühgetränkezubereitungsmaschine 29 neben der Dampferzeugungseinrichtung 1 zusätzlich noch eine mit dem Durchlauferhitzer 8 in Wärmekontakt stehende Warmhalteplatte 30 auf, auf der ein Gefäß 31, beispielsweise eine aus Glas oder einem sonstigen Material hergestellte Kaffeekanne, abstellbar ist. Das Gefäß 31 dient zur Aufnahme eines Brühgetränks, beispielsweise eines Kaffees oder eines Tees. Zur besseren Handhabung ist das Gefäß 31 mit einem Handgriff 32 versehen. Zur besseren Warmhaltung der Getränke ist das Gefäß 31 mit einem die Öffnung verschließenden Deckel 33 versehen, der zum Einfließen des Brühgetränks vom Filtergehäuse 35 her eine zentrale Öffnung 34 aufweist.

Oberhalb des Gefäßes 31 ist im Gehäuse (nicht dargestellt) der Brühgetränkezubereitungsmaschine 29 nach Fig. 2 das Filtergehäuse 35 eingesetzt, das mit einem Papierfilter 36 zur Aufnahme von Kaffeepulver oder Teeblättern (nicht dargestellt) versehen werden kann. Oberhalb der Öffnung 72 des Filtergehäuses 35 ist ein im Gehäuse der Brühgetränkezubereitungsmaschine 29 integrierter Brühkopf 38 ausgebildet, der über eine Steigleitung 39 mit dem Mehrwegeventil 41 verbunden ist.

Das Mehrwegeventil 41 stellt nach Fig. 2 in seiner Expansionsstellung 37, 43, also in der Nullstellung des Ventils 41, eine Verbindung von der Leitung 14 zu einer Expansionsleitung 42 her, die oberhalb der maximalen Füllhöhe 21 in den Wasservorratsbehälter 2 mündet. Hierdurch soll stets gewährleistet sein, daß nach Beendigung des Dampfbetriebes durch Verdrehung des Mehrwegeventils 41 von der Dampfstellung (Verbindung der Leitung 14 mit der Leitung 14.1) zur Nullstellung (Verbindung der Leitungen 14 und 14.1 mit der Expansionsleitung 42) der in den Leitungen 14 und 14.1 aufgebaute Druck zum Wasservorratsbehälter 2 hin expandiert wird, um ein unerwünschtes Abzischen von heißem Dampf bei Verdrehung des Mehrwegeventils 41 in die Kaffee- oder Espressostellung am Brühkopf 38 oder am Brühkolben 54 zu vermeiden, was bei Hantierungen der Hand einer Bedienungsperson in diesem Bereich zu Verbrennungen führen kann. Die Expansionsleitung 42 ist also in der Expansionsstellung 37, 43 des Mehrwegeventils 41 mit der Leitung 14 verbunden. Als Expansionsleitung kann aber auch die Verbindungsleitung 45 dienen. In diesem Fall kann die Expansionsleitung 42 wegfallen.

Das Mehrwegeventil 41 ist in Fig. 2 auch in die Espressostellung 37, 44 bringbar, die die Verbindung der vom Durchlauferhitzer 8 kommenden Leitung 14 mit einer Verbindungsleitung 45 herstellt. Dies ist in Fig. 1 nicht notwendig, da kein Mehrwegeventil 41 benötigt wird.

In der Praxis ist es durchaus denkbar, daß der Brühkolben 54 und der Brühkopf 38 von einer Baueinheit gebildet werden und daß zum Herstellen von Kaffee ein Filtergehäuse 35 oder zum Herstellen von Espresso ein Siebkorbträger 55 an dieser Baueinheit befestigt werden. Somit könnte dann auch auf die Warmhalteplatte 30 das zur Aufnahme von Espresso dienende Gefäß 57 mit kleinerem Volumen abgestellt werden. In Fig. 2 ist allerdings eine Brühgetränkezubereitungsmaschine 29 gezeigt, bei der auf der einen Seite ein Brühkopf 38 mit einem Filtergehäuse 35 und auf der anderen Seite ein Brühkolben 54 mit einem Siebkorbträger 55 ausgebildet sind, so daß beide Zubereitungsgeräte räumlich voneinander getrennt aber in einer einzigen Getränkezubereitungsmaschine 29 ausgebildet sind. Seitlich an der Brühgetränkezubereitungsmaschine 29 kann dann noch die Dampfleitung 18 austreten, an deren Ende die Aufschäumdüse 28 ausgebildet ist.

Das Mehrwegeventil 41 kann in die Kaffee- oder Teestellung 37, 40, in die Espressostellung 37, 44, in die Dampfstellung 37, 37.1 sowie in die Nullstellung bzw. Expansionsstellung 37, 43 gedreht werden (siehe Drehpfeil 58), wobei entsprechend der gewählten Stellung gleichzeitig auch die mit dem Mehrwegeventil 41 verbundenen elektrische Mittel (nicht dargestellt) derart gekoppelt sein können, daß beispielsweise in der Espressostellung die Druckpumpe 49 automatisch zu laufen beginnt und in der Dampf- bzw. Kaffee- oder Teestellung der Durchlauferhitzer 8 ebenfalls automatisch mit Strom versorgt wird, so daß die vom Durchlauferhitzer 8 selbsttätig ausgehende Förderung durch Erhitzung des Wassers unter Bildung von Dampfblasen 22 eingeleitet wird.

Die Wirkungsweise der erfindungsgemäßen Brühgetränkezubereitungsmaschine 29 ist folgende:

### 1. Kaffee- oder Teeherstellung:

Vor Einschaltung der Brühgetränkezubereitungsmaschine 29 muß der Wasservorratsbehälter 2 nach Fig. 2 mit Wasser gefüllt sein. Das Absperrventil 5 ist in seiner Offenstellung und das Wasser füllt über die Leitung 4 den Durchlauferhitzer 8. Bei Druckausgleich sowohl vor wie hinter dem Absperrventil 5 schließt das Absperrventil 5, indem die Kugel 7 aufgrund ihres Auftriebes gegen den Dichtsitz 6 fährt. Danach, bzw. bereits zuvor, wird in das Filtergehäuse 35 ein Papierfilter 36 eingelegt, der mit Kaffeemehl oder Teeblättern gefüllt ist. Nunmehr wird das Mehrwegeventil 41 von der Nullstellung 37, 43 auf Kaffee- oder Teebetrieb 37, 40 gedreht, so daß dieses eine Verbindung von der Leitung 14 zur Steigleitung 39 herstellt. Gleichzeitig mit dem Einstellen des Kaffee- oder Teebetriebs wird die Heizeinrichtung 10 des Durchlauferhitzers 8 mit Spannung versorgt, wodurch das vom Wasservorratsbehälter 2 über die Auslaßleitung 4 fließende Wasser in dem Wasserrohr 9 erhitzt wird. Die Heizeinrichtung 10 kann aber auch durch einen separaten Ein-/Ausschalter (nicht dargestellt) betätigt werden.

Durch die Aufheizung der Heizeinrichtung 10 wird infolge der Wärmeübertragung die Wärme auf das Wasserrohr 9 übertragen (Aufheizphase). Es bilden dabei im Wasserrohr 9 nach Erreichen des Siedepunktes Dampfblasen 22, die einen geringen Überdruck im Wasserrohr 9 erzeugen. Dadurch, daß das erste Absperrventil 5 in Fig. 2 geschlossen ist, sind die Dampfblasen 22 also gezwungen, den Durchlauferhitzer 8 in Richtung des Auslasses 13 zu verlassen, von wo diese über die Leitung 14 und das Mehrwegeventil 41 in die Steigleitung 39 gelangen.

Bei der Dampfblasenbildung im Wasserrohr 9 des Durchlauferhitzers 8 wird durch das Aufsteigen der Dampfblasen 22 von diesen schubweise heißes Wasser in der Steigleitung 39 nach oben mitgerissen, also gefördert, von wo es über am Brühkopf 38 ausgebildete Durchlässe 63 auf das im Papierfilter 36 befindliche Kaffeemehl(nicht dargestellt) fließt (Transportphase). Während der Extrahierung strömt das Brühgetränk über am unteren Ende des Filtergehäuses 35 ausgebildete Öffnungen (nicht dargestellt) heraus und strömt über die am Deckel 33 ausgebildete Öffnung 34 in das Gefäß 31 ein.

Sobald ein Schub heißes Wasser aus dem Durchlauferhitzer 8 heraustransportiert wurde, öffnet aufgrund der nunmehr unterschiedlichen Wasserspiegel von Ausgangsseite der Leitung 14 und Wassertank 2, so daß der am ersten Rückschlagventil 5 auftretende geodätische Druck des Wassers die Kugel 7 nach unten drückt und Wasser zum Durchlauferhitzer 8 in kürzester Zeit nachfließt (Ansaugphase). Das erste Absperrventil 5 schließt wieder durch Aufsteigen der Kugel 7 bis zum Dichtsitz 6. Dieser schubweise vonstatten gehende Brühzyklus wiederholt sich so lange, bis das im Wasservorratsbehälter 2 befindliche Wasser völlig abgelaufen ist. Der Brühvorgang ist dann beendet.

Nach Beendigung des Brühvorgangs, also wenn kein Wasser mehr im Wasserrohr 9 ist, werden der Durchlauferhitzer 8 und der Thermostat 11 so heiß, daß der Thermostat 11 den Strom zur Heizeinrichtung 10 abschaltet. Es beginnt nunmehr die Warmhaltephase des Brühgetränks. Sobald der Thermostat 11 wieder abgekühlt ist, schaltet dieser wieder den Strom zum Durchlauferhitzer 8 kurzzeitig ein und letzterer heizt sich und somit auch die Warmhalteplatte 30 auf, bis der Thermostat 11 wieder abschaltet. Die erhitzte Warmhalteplatte 30 leitet die Wärme über das Gefäß 31 in das Brühgetränk. Nach Abschalten des Hauptschalters (nicht dargestellt), bzw. Verdrehen des Mehrwegeventils 41 in die Nullstellung 37,43 der Brühgetränkezubereitungsmaschine 29 wird auch der Durchlauferhitzer 8 nicht mehr mit Strom versorgt.

### 2. Zubereiten von Dampf:

Der Wasservorratsbehälter 2 wird nach Fig. 2 mit etwas Wasser gefüllt. Auch hier fließt das Wasser zunächst am offenen Absperrventil 5 vorbei zum Durchlauferhitzer 8. Wird das Mehrwegeventil 41 nach Fig. 2 in die Dampfstellung 37, 37.1 gebracht, wird die Leitung 14 vor dem Mehrwegeventil 41 mit der Leitung 14.1 nach dem Mehrwegeventil 41 verbunden. Durch das Einschalten des Mehrwegeventils 41 in die Dampfstellung wird die Heizeinrichtung 10 mit Strom versorgt und sie erhitzt das im Wasserrohr 9 befindliche Wasser. Das Wasser im Wasserrohr 9 beginnt zu sieden und es bilden sich Dampfblasen 22, die aufgrund der Volumenzunahme zu einem geringen Überdruck im Wasserrohr 9 führen, so daß bei geschlossenem Absperrventil 5 die Dampfblasen 22 aufsteigen und dabei die Leitung 14 und das Mehrwegeventil 41 passieren.

Schließlich gelangen die Dampfblasen 22 über den Eingang 15 in den Raum des Dampfabscheiders 16. Durch die aufsteigenden Dampfblasen 22 wird aber auch heißes Wasser über die Leitung 14 in den Dampfabscheider 16 gefördert. Während das heiße Wasser in den unterhalb des Eingangs 15 gebildeten Raum des Dampfabscheiders 16 fließt, steigt der Dampf über die Dampfleitung 18 in Richtung des Pfeiles 26 zum zweiten Rückschlagventil 27 auf, das, sobald ein gewisser Überdruck in der Dampfleitung 18 entstanden ist, zur Aufschäumdüse 28 hin öffnet.

Das Rückschlagventil 27 wird in Fig. 2 von einem Dichtsitz 64 gebildet, gegen den eine Kugel 65 mittels einer Feder 66 dichtend gedrückt wird. Das Rückschlagventil 27 sorgt dafür, daß an der Aufschäumdüse 28 Dampf unter Druck und daher mit ausreichend hoher Geschwindigkeit ausströmt, der geeignet ist, Milch aufzuschäumen oder Getränke in kurzer Zeit zu erwärmen.

Das sich unterhalb des Eingangs 15 ansammelnde Heißwasser fließt nach Fig. 1 und 2 über die Abflußleitung 19 in die Auslaßleitung 4 zurück. Damit beim Fördern des Heißwassers aus dem Durchlauferhitzer 8 dieses nicht zurück über die Auslaßleitung 4 und die Abflußleitung 19 und somit von dort in den Dampfabscheider 16 fließt, weist die Abflußleitung 19 einen geringeren Querschnitt als die Leitung 14 auf. Es ist aber auch denkbar, anstelle einer dünneren Leitung 19 auch eine im Querschnitt gleichbreite Leitung 19 wie die Leitung 14 zu wählen, die dann mit einer Drossel 75 oder mit einem Rückschlagventil (nicht dargestellt) versehen ist. Beide Strömungsverhinderungseinrichtungen sind dazu geeignet, daß das vom Durchlauferhitzer 8 geförderte Heißwasser den Weg über die Leitung 14 zum Dampfabscheider 16 nimmt und nicht der Abflußleitung 19 zum Boden 20 des Dampfabscheiders 16 folgt.

Nachdem der Durchlauferhitzer 8 einen Schub heißes Wasser in den Dampfabscheider 16 gefördert hat, öffnet das Absperrventil 5 und kaltes Wasser fließt über die Auslaßleitung 4 erneut in den Durchlauferhitzer 8, wo es wiederum unter Dampfblasenbildung erhitzt und anschließend durch aufsteigende Dampfblasen 22 in den Dampfabscheider 16 gefördert wird. Dieser Brühzyklus wiederholt sich so oft, bis das Wasser im Wasservorratsbehälter 2 restlos abgeflossen und erhitzt ist.

Der Brühzyklus kann auch beendet werden, wenn das Mehrwegeventil 41 in seine Nullstellung gebracht wurde, in der einerseits die Heizeinrichtung 10 abgeschaltet und andererseits die Verbindung der Leitung 14 von der Leitung 14.1 getrennt und die Leitungen 14 und 14.1 mit der Expansionsleitung 42 verbunden werden. Auf diese Weise wird der in der Leitung 14 vorhandene Überdruck über die Expansionsleitung 42 zum Wasservorratsbehälter 2 (Pfeilrichtung 78) abgebaut. Durch den Dampfabscheider 16 kann auch mit einem herkömmlichen Durchlauferhitzer 8, der keine große Wärmespeicherkapazität besitzt, erstmals richtig Dampf erzeugt werden.

### 3. Herstellung eines Espressogetränks:

Zunächst werden nach Fig. 1 und 2 der Wasservorratsbehälter 2 mit Wasser und der Siebkorbträger 55 mit Espressomehl gefüllt, wobei letzterer anschließend dichtend mit dem Brühkolben 54 verbunden wird. Nunmehr wird gemäß Fig. 2 das Mehrwegeventil 41 in die Espressostellung 37, 44 verdreht, so daß das Mehrwegeventil 41 die Verbindungsleitung 45 mit der Leitung 14 verbindet ( nach Fig. 1 ist dies nicht erforderlich, da bereits die Verbindung der Verbindungsleitung 45 mit der Leitung 14 besteht). In dieser Stellung ist wiederum die Heizeinrichtung 10 des Durchlauferhitzers 8 automatisch oder mittels eines separaten Ein-/Ausschalters (nicht dargestellt) mit elektrischer Spannung versorgt, so daß sich das im Wasserrohr 9 des Durchlauferhitzers 8 befindliche Wasser erhitzt. Nach Fig. 1 muß ein gesonderter Ein- Ausschalter betätigt werden, um die Heizeinrichtung 10 einzuschalten.

Die Förderung des heißen Wassers erfolgt wiederum durch aufsteigende Dampfblasen 22, das über den Auslaß 13 und die Leitung 14 schubweise, wie bereits oben ausführlich beschrieben, zur Verbindungsleitung 45 strömt, von wo es dann in den Zwischenbehälter 46 und in die Espressoleitung 48 einfließt. Der Durchlauferhitzer 8 fördert somit schubweise ein heißes Dampf-Wasser-Gemisch in den Zwischenbehälter 46, bis dieser von heißem Wasser gefüllt ist. Der Dampf steigt über die in der Abstellplatte 59 ausgebildeten Löcher 60 nach außen. In Höhe der maximalen Füllhöhe 67 des Zwischenbehälters 46 ist ein Überlauf 68 ausgebildet, der mit dem Wasservorratsbehälter 2 verbunden ist. Überschüssig heißes Wasser fließt nunmehr in den Wasservorratsbehälter 2 zurück und wärmt das dort noch befindliche kalte Wasser auf.

Über einen in der Zeichnung nicht näher dargestellten Schalter kann nunmehr die von einem Elektromotor (nicht dargestellt) betreibbare Druckpumpe 49 eingeschaltet werden, so daß das aus dem Heißwasserspeicher 46 fließende Heißwasser über die Espressoleitung 48 angesaugt, in der Druckpumpe 49 unter Druck und anschließend in die Druckleitung 52 gepumpt wird. Dabei muß der Pumpendruck des Heißwassers ein Rückschlagventil 51 überwinden, damit dieses öffnet. Beim Ansaugen muß vor der Druckpumpe 49 ein entsprechend ausgebildetes Ansaugventil (nicht dargestellt) geöffnet und in der Druckphase wieder geschlossen werden.

Das unter Druck in der Druckleitung 52 stehende Heißwasser wird nunmehr über den Brühkolben 54 in die Druckkammer 53 eingeleitet, wo es aus dem Espressomehl Extraktionsstoffe unter Druck extrahiert. Das so entstehende Espressogetränk fließt über ein im Siebkorbträger 55 ausgebildetes Sieb (nicht dargestellt) aus der Brühkammer 53 heraus und gelangt dabei unter Bildung von Crema in ein darunter abgestelltes Gefäß 57. Die Cremabildung wird vorwiegend durch die schlagartige Expansion des Extraktionsgetränkes am Sieb erreicht. Nach fertiggestelltem Espressogetränk wird der Schalter (nicht dargestellt) der Druckpumpe 49 wieder abgeschaltet.

Bei der Espressoherstellung ermöglicht der Heißwasserspeicher 46 nach der Erfindung eine Bereitstellung von heißem Wasser trotz der Verwendung des herkömmlichen Durchlauferhitzers 8. Durch den Heißwasserspeicher 46 ist in ausreichender Menge heißes Wasser vorhanden, das bei der Espressoherstellung dem Heißwasserspeicher 46 entzogen wird. Obwohl also der Durchlauferhitzer 8 nur schubweise heißes Wasser in kleinen Mengen in den Heißwasserspeicher 46 fördert, dient letzterer als Zwischenlagerung des heißen Wassers, damit während des Pumpenbetriebes die Druckpumpe 49 kontinuierlich heißes Wasser in Fließrichtung 50 zum Brühkolben 54 pumpt. Der Heißwasserspeicher dient somit als Zwischenpuffer und zum Ausgleich der Förderströme von Durchlauferhitzer und Druckpumpe. Das Mehrwegeventil 41 arbeitet nach Fig. 2 in der Espressostellung im Standby-Betrieb, d.h., es wird heißes Wasser gespeichert, damit dann bei Einschaltung der Druckpumpe 49 sofort heißes Wasser zur Verfügung steht. Nach Fig. 1 ist dies auch ohne Ventil möglich.

Durch die Bildung des erfindungsgemäßen Heißwasserspeichers 46 kann nach Fig. 1 eine besonders preisgünstige Espressomaschine unter Verwendung eines bei Kaffeemaschinen üblicherweise benutzten Durchlauferhitzers 8 hergestellt werden. Selbstverständlich gilt dies auch bei der Einrichtung nach Fig. 2.

## Patentansprüche

1. Espressomaschine, die aus einer einen elektrisch beheizten Wassererhitzer (8) aufweisenden Heizeinrichtung (10) besteht, mit der Wasser erhitzt werden kann, das einer elektrisch angetriebenen Druckpumpe (49) zugeführt, dort unter Druck gesetzt und anschließend einer mit Espressomehl befüllbaren und verschließbaren Druckkammer (53) zugeführt wird, von wo das so extrahierte Espressogetränk über einen Auslaß (68) in einen Behälter (57) abfließt,
**dadurch gekennzeichnet**,
daß in dem Wassererhitzer (8) ein Dampf-Wasser-Gemisch erzeugt wird und daß in der Leitung (14, 45, 48) zwischen dem Wassererhitzer (8) und der Druckpumpe (49) ein Heißwasserspeicher (46) ausgebildet ist, aus dem das heiße Wasser zur Druckpumpe (49) hin abfließen kann.

2. Espressomaschine nach Anspruch 1,
**dadurch gekennzeichnet**,
daß der Wassererhitzer (8) aus einem selbstfördernden Durchlauferhitzer besteht, der unterhalb des Wasserspiegels des Wasservorratsbehälters (2) angeordnet ist und daß in der Auslaßleitung (4) ein in Richtung des Wasservorratsbehälters (2) bei Druckerhöhung in der Auslaßleitung (4) schließendes Absperrventil (5) ausgebildet ist.

3. Espressomaschine nach Anspruch 1,
**dadurch gekennzeichnet**,
daß der Heißwasserspeicher (46) ein kleineres Fassungsvermögen als der Wasservorratsbehälter (2) aufweist.

4. Espressomaschine nach Anspruch 3,
**dadurch gekennzeichnet**,
daß der Wasservorratsbehälter (2) offen ist und oberhalb des Duchlauferhitzers (8) angeordnet ist und daß der Heißwasserspeicher (46) weitgehendst oberhalb der maximalen Füllhöhe (21) des Wasservorratsbehälters (2) und der Druckpumpe (49) angeordnet ist.

5. Espressomaschine nach Anspruch 1,
**dadurch gekennzeichnet**,
daß der Heißwasserspeicher (46) eine mit Löchern (60) versehene Abdeckplatte (59) aufweist, auf der Getränketassen (61) zu deren Erwärmung abstellbar sind.

6. Espressomaschine nach Anspruch 2 ,
**dadurch gekennzeichnet**,
daß in der Espressomaschine zusätzlich ein Dampfabscheider (16) integriert ist, daß in der Leitung (14, 45) ein Mehrwegeventil (41) ausgebildet ist, das in einer dritten Stellung (37, 44) (Espressostellung) die Verbindung zum Heißwasserspeicher (46) freigibt und die Verbindung zum Dampfabscheider (16) sperrt und das in einer ersten Stellung (37, 37.1) (Dampfstellung) die Verbindung zum Heißwasserspeicher (46) sperrt und die Verbindung zu einem Dampfabscheider (16) freigibt, daß in dem Wassererhitzer (8) ein Dampf-Wasser-Gemisch erzeugt wird, daß dieses Dampf-Wasser-Gemisch über eine weitere Ausgansleitung (14.1) und von dort über einen Einlaß (15) in den Dampfabscheider (16) gefördert wird, aus dem der abgeschiedene Dampf über eine Dampfleitung (18) entnommen werden kann.

7. Espressomaschine nach Anspruch 6 ,
**dadurch gekennzeichnet**,
daß das Mehrwegeventil (41) eine vierte Stellung (37, 43 oder 37, 44) (Expansionsstellung) aufweist, in der eine Expansionsleitung (42) mit der Ausgangsleitung (14.1) freigegeben wird, die entweder zum Wasservorratsbehälter (2) oder zu einem gesonderten Wassertank (62) führt.

8. Espressomaschine nach Anspruch 6,
**dadurch gekennzeichnet**,
daß diese auch als Kaffee- oder Teemaschine in einer Brühgetränkezubereitungsmaschine (29) verwendet wird, daß in der Ausgangsleitung (14, 45) das Mehrwegeventil (41) in einer zweiten Stellung (37,40) (Kaffee- oder Teestellung) die Leitung (14) zum Heißwasserspeicher (46) sperrt und eine im Gerät (29) ausgebildete Steigleitung (39) zu einem Kaffee- und/oder Teefiltergehäuse (35) freigibt.

9. Brühgetränkezubereitungsmaschine nach Anspruch 7 und 8,
**dadurch gekennzeichnet**,
daß die Expansionstellung (37,43) des Mehrwegeventils (41) die Nullstellung (43) des Mehrwegeventils (41) ist und daß die Dampfstellung (37,37.1) auf der einen Seite der Nullstellung (37,43) und die Kaffee- und/oder die Espressostellung (37,40 bzw. 37,44) auf der anderen Seite der Nullstellung (37,43) angeordnet sind.
